# EUROPÄISCHE PATENTSCHRIFT

(11) **EP 4 159 331 B1**
(45) Veröffentlichungstag und Bekanntmachung des Hinweises auf die Patenterteilung: **22.05.2024**
(21) Anmeldenummer: 21199656.6
(22) Anmeldetag: 29.09.2021
(51) Int. Cl.: B08B 7/02

(54) **REINIGUNGSVORRICHTUNG MIT OSZILLIERENDER OBJEKTAUFNAHME**
CLEANING DEVICE WITH OSCILLATING OBJECT HOLDER
DISPOSITIF DE NETTOYAGE POURVU DE PORTE-OBJET OSCILLANT

(43) Veröffentlichungstag der Anmeldung: 05.04.2023
(73) Patentinhaber: Solukon Ingenieure GbR, 86165 Augsburg (DE)
(72) Erfinder: Hartmann, Andreas, 86391 Stadtbergen (DE)
(74) Vertreter: Wiedemann, Markus

(56) Entgegenhaltungen:
- EP-A1- 3 257 607
- EP-A1- 3 527 304
- CN-A- 109 732 086
- CN-B- 105 458 264
- DE-A1-102018 008 738
- DE-A1-102019 000 043
- US-A1- 2021 031 453
- US-A1- 2021 170 491

## Beschreibung

Die vorliegende Erfindung betrifft ein eine Vorrichtung zum Trennen von unverfestigt verbliebenem Aufbaumaterial von wenigstens einem durch schichtweises Aufbringen und selektives Verfestigen des Aufbaumaterials im Rahmen eines generativen Bauprozesses entstandenen realen Objekts, gemäß dem Oberbegriff von Anspruch 1.

Eine gattungsgemäße Vorrichtung ist aus DE 10 2020 003 334 A1 bekannt. Dort wird zunächst eine Lasersinter- oder Laserschmelzvorrichtung als Bauvorrichtung beschrieben. Zum Aufbauen des Objekts wird zunächst eine Bauplattform durch schichtweises Aufbringen und selektives Verfestigen eines pulverförmigen Aufbaumaterials aufgebaut, auf der dann das Objekt ebenfalls durch schichtweises Aufbringen und selektives Verfestigen des pulverförmigen Aufbaumaterials aufgebaut wird.

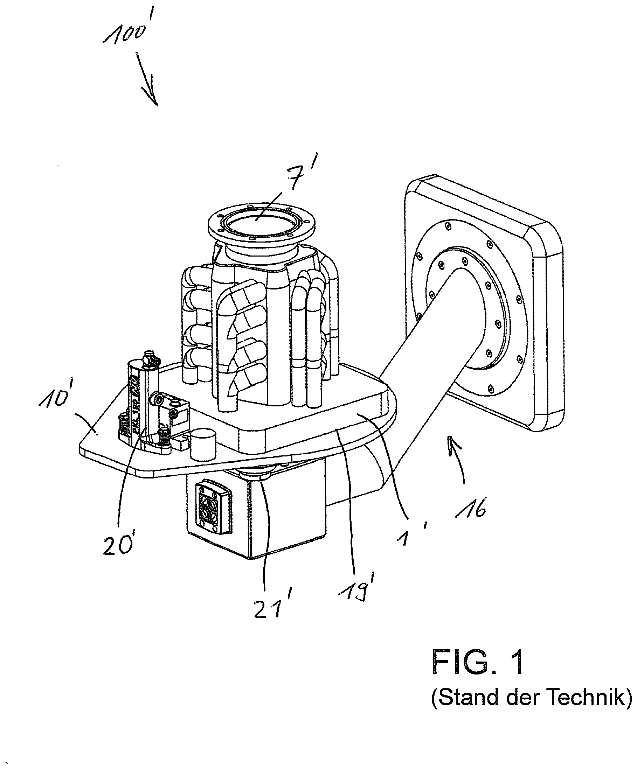

Zusätzlich zur Bauvorrichtung wird eine in **Fig. 1** gezeigte Reinigungsvorrichtung 100' beschrieben, durch nach dem Abschluss des Bauprozesses unverfestigt gebliebenes Pulver von dem Objekt 7' ab gereinigt wird. An einem Drehteller 10' einer Schwenkeinrichtung 16' ist eine Spanneinrichtung 19' ausgebildet, durch welche das Objekt 7' mit seiner Bauplattform 10' am Drehteller 10' gespannt wird. Dann wird das Objekt 7' durch die Schwenkeinrichtung 16' verdreht, damit unverfestigt gebliebenes Pulver von und aus dem Objekt 7' rieseln kann. Zusätzlich ist direkt an dem Drehteller 10' ein Schwingungserreger 20' angeordnet, welcher den Drehteller 10' und die mit ihm festverbundene Spanneinrichtung 19' und das daran gespannte Objekt 7' zu Schwingungen anregt, um durch die induzierten Vibrationen ein Ablösen von Pulver von dem Objekt 7' zu unterstützen. Dabei ist der Drehteller 10' durch relativ weiche Gummielemente 21' an einer hier nicht sichtbaren Platte mitdrehend gelagert, welche durch einen Motor der Schwenkeinrichtung 16' in Drehung versetzt wird, um eine Übertragung der vom Schwingungserreger 20 in den Drehteller 10` und von dort in das Objekt 7' eingebrachten Schwingungen (Körperschall) in die restliche Reinigungsvorrichtung 100' weitgehend zu vermeiden, da diese ansonsten mitschwingen und dann unerwünschten Luftschall abstrahlen würde. Die Gummielemente 21' entkoppeln daher den Schwingungserreger 20', den Drehteller 10` und die Spanneinrichtung 19' von der restlichen Reinigungsvorrichtung 100`.

Als nachteilig hat sich dabei erwiesen, dass die Steifigkeit der Gummielemente 21' vom Gewicht des Objekts 7' abhängig ist. Je größer daher das Gewicht des auf dem Drehteller 10' aufgenommenen Objekts 7' ist, desto steifer wird die Lagerung des Drehtellers 10' und des darauf gespannten Objekts 7' durch die Gummielemente 21', und je niedriger das Gewicht des Objekts 7' ist, desto weicher wird die Lagerung des Drehtellers 10` und des darauf gespannten Objekts 7' durch die Gummielemente 21'. Weiterhin taumelt das von dem Drehteller 10' frei auskragende Objekt 7' unkontrolliert, wenn der Drehteller 10' zusammen mit dem Objekt 7' rotiert wird, so dass sich dabei bedingt durch die Gewichtsverlagerung des Objekts 7' ` durch die periodische Druck- und Zugbelastung der Gummielemente 21 auch deren Steifigkeit ständig ändert. Die Steifigkeit der Lagerung durch die Gummielemente 21' hat aber einen Einfluss auf die Schwingungsfrequenz f und die Schwingungsamplitude A, mit welchen das auf dem Drehteller 10' gespannte Objekt 7' infolge der Anregung durch den Schwingungserreger 20' schwingt. Beispielsweise verschiebt sich die Schwingungsfrequenz f zu höheren Frequenzen bei hohem Gewicht des Objekts 7' wegen der damit hergehenden Versteifung der Lagerung durch die Gummielemente 21' und zu niedrigeren Frequenzen bei einer bei niedrigem Gewicht des Objekts 7' einhergehenden weicheren Lagerung durch die Gummielemente 21'. In analoger Weise verändern sich auch die Schwingungsamplituden A des Objekts 7' abhängig von der Steifigkeit der Gummielemente 21'.

Es hat sich demgegenüber gemäß DE 10 2020 003 334 A1 herausgestellt, dass optimale Schwingungsfrequenzen f, z.B. die Eigenfrequenz ωe des Objekts 7', und/oder optimale Schwingungsamplituden A existieren, mit denen das Reinigungsergebnis des Objekts 7' optimal wird, so dass eine Veränderung der Steifigkeit der Lagerung des Objekts 7' im Laufe des Reinigungsprozesses weitgehend zu vermeiden ist, weil diese die Schwingungsfrequenz f bzw. die Schwingungsamplitude A des Objekts 7' beeinflusst.

Die Aufgabe der Erfindung besteht folglich darin, die Reinigungsvorrichtung derart weiterzubilden, dass sie ein verbessertes Reinigungsergebnis liefert.

Diese Aufgabe wird erfindungsgemäß durch die Merkmale von Anspruch 1 gelöst.

### Offenbarung der Erfindung

Das Herstellen des wenigstens einen dreidimensionalen Objekts, wie beispielsweise eines Bauteils oder Modells, welches dann mit dem erfindungsgemäßen Verfahren von unverfestigt verbliebenem Aufbaumaterial getrennt wird, erfolgt in einem Schichtbauverfahren mit Hilfe von Computerdaten, indem wiederholt dünne Schichten aus losem pulverförmigen Aufbaumaterial auf eine Bauplattform und/oder in einem Baubehälter aufgetragen werden und jede einzelne Schicht selektiv zu einem Bauteil- oder Modellquerschnitt verfestigt wird. Die Verfestigung erfolgt beispielsweise chemisch, indem mit Drucktechnologie Tröpfchen aus Kleber selektiv auf festgelegte Bereiche der Schichten aus losem pulverförmigen Aufbaumaterial aufgebracht werden. Alternativ besteht die Möglichkeit, loses pulverförmiges Aufbaumaterial selektiv mit energiereicher (Laser-)Strahlung zu verschmelzen oder zu versintern.

Unter einem Objekt soll daher im Sinne der Erfindung ein zusammen mit der Bauplattform hergestelltes Werkstück oder Bauteil verstanden werden, oder auch das Werkstück oder Bauteil alleine ohne eine Bauplattform sowie auch ein Objekt, welches sich in einem Baubehälter befindet, in welchem es generativ erzeugt worden ist.

Nach dem additiven Bauprozess haftet noch unverfestigt verbliebenes, pulverförmiges Aufbaumaterial an dem Objekt. Dieses unverfestigt verbliebene, pulverförmiges Aufbaumaterial soll von dem Objekt getrennt werden. Das Trennen des wenigstens einen Objekts von losem, nicht verfestigtem pulverförmigem Aufbaumaterial kann das komplette Auspacken des Objekts aus dem Kuchen losen Aufbaumaterials oder Pulvers beinhalten oder aber lediglich eine Abreinigung von Resten von losem Pulver oder Aufbaumaterial von dem wenigstens einen Objekt und optional auch von der Bauplattform und gegebenenfalls auch von Stützstrukturen, welche nach dem Auspacken noch an dem wenigstens einen Objekt vorhanden sind.

Durch eine Anregung des wenigstens einen Objekts zu Schwingungen kann das unverfestigt verbliebene Aufbaumaterial insbesondere fluidisiert werden, wodurch es von dem wenigstens einen Objekt besser abfließen kann. Der Schwingungserreger erzeugt daher Schwingungen mit einer Erregeramplitude Aₑ und mit einer Erregerfrequenz fₑ, die dann auf das Objekt übertragen werden.

Der Schwingungserreger kann dabei beispielsweise einen Rüttler oder Vibrator umfassen, welcher eine periodische Schwingung erzeugt. Alternativ oder zusätzlich kann der Schwingungserreger auch einen sog. Klopfer umfassen, welcher impulsartig eine Kraft erzeugt, welche dann das wenigstens eine Objekt Schwingungen anregt, beispielsweise in seiner Eigenfrequenz ωe oder einer Vielfachen davon.

Die Erfindung geht aus von Reinigungsvorrichtung zum Trennen von unverfestigt verbliebenem Aufbaumaterial von wenigstens einem durch schichtweises Aufbringen und selektives Verfestigen des Aufbaumaterials im Rahmen eines generativen Bauprozesses entstandenen Objekts, welche wenigstens Folgendes aufweist:
a) Eine Objektaufnahme, welche ausgebildet ist zum Aufnehmen des wenigstens einen Objekts, einer Bauplattform des wenigstens einen Objekts oder eines Baubehälters, welcher das wenigstens eine Objekt enthält, insbesondere eine Spanneinrichtung zum Spannen des wenigstens einen Objekts, einer Bauplattform des wenigstens einen Objekts oder eines Baubehälters, welcher das wenigstens eine Objekt enthält,
b) eine elektronische Steuerung, und
c) einen von der elektronischen Steuerung gesteuerten Schwingungserreger, welcher von der elektronischen Steuerung derart gesteuert ist, dass er wenigstens die Objektaufnahme zu Schwingungen anregt, um im Rahmen eines Reinigungsprozesses unverfestigt verbliebenes Aufbaumaterial von dem wenigstens einen, an oder in der Objektaufnahme aufgenommenen Objekt zu trennen.

Gemäß der Erfindung ist vorgesehen, dass
d) die Objektaufnahme gegenüber einer Basis in wenigstens einem insbesondere rotatorischen und/oder linearen Freiheitsgrad beweglich gelagert oder geführt ist, und dass
e) der Schwingungserreger zwischen der Objektaufnahme und der Basis angeordnet ist und die Objektaufnahme in dem wenigstens einen insbesondere rotatorischen und/oder linearen Freiheitsgrad zu Schwingungen anregt, indem er sich einerseits an der Objektaufnahme und andererseits an der Basis abstützt.

Die bewegliche Lagerung der Objektaufnahme gegenüber der Basis oder die Führung der Objektaufnahme an der Basis in dem wenigstens einem insbesondere rotatorischen und/oder linearen Freiheitsgrad ist vorzugsweise ohne elastische Elemente wie die eingangs genannten Gummielemente des Stands der Technik vorgesehen. Folglich können bei der Erfindung nicht die oben beschriebenen Nachteile des Stands der Technik eintreten. Vielmehr ist die bewegliche Lagerung der Objektaufnahme gegenüber der Basis oder die Führung der Objektaufnahme an der Basis so hinreichend steif ausgeführt, dass die Gewichtskraft des Objekts im Wesentlichen keinen Einfluss auf die Schwingungsamplitude A und/oder auf die Schwingungsfrequenz f des wenigstens einen Objekts hat, wenn es an der Objektaufnahme aufgenommen ist und durch den Schwingungserreger dann beispielsweise indirekt zu Schwingungen angeregt wird.

Der von dem Schwingungserreger in die Objektaufnahme eingebrachte Körperschall wird dann von dort auf das wenigstens eine, in oder an der Objektaufnahme aufgenommene Objekt, die Bauplattform oder den Baubehälter übertragen, welches oder welcher dadurch in Schwingungen versetzt wird, weil das wenigstens eine Objekt dann mit der Objektaufnahme mitschwingt. Da die Objektaufnahme ausgebildet ist, dass sie das wenigstens eine Objekt, die Bauplattform oder den Baubehälter steif aufnimmt oder spannt, findet eine Übertragung des Körperschalls von der Objektaufnahme auf das wenigstens eine Objekt statt, so dass die Schwingungsfrequenz f des wenigstens einen Objekts im Wesentlichen mit der von dem Schwingungserreger erzeugten Erregerfrequenz fe und die Schwingungsamplitude A des wenigstens einen Objekts im Wesentlichen mit der von dem Schwingungserreger erzeugten Erregeramplitude Ae übereinstimmt. Folglich kann die Erregerfrequenz fe und/oder die Erregeramplitude Ae im Wesentlichen ungedämpft in eine entsprechende Schwingungsfrequenz f und/oder in eine entsprechende Schwingungsamplitude A des wenigstens einen Objekts umgesetzt werden.

In vorteilhafter Weise ändern sich daher die Schwingungsamplitude A und die Schwingungsfrequenz des Objekts nicht, wenn Objekte unterschiedlichen Gewichts gereinigt werden oder wenn sich das Gewicht des Objekts infolge des Reinigungsvorgangs ändert oder wenn identische Objekte, Bauplattformen oder Baubehälter jeweils mit unterschiedlicher Lage ihres Schwerpunkts an der Objektaufnahme aufgenommen werden.

Der Schwingungserreger kann insbesondere an der Basis in dem wenigstens einen, insbesondere rotatorischen und/oder linearen Freiheitsgrad derart geführt und/oder gelagert sowie ausgebildet sein, dass er eine oszillierende Rotation und/oder eine oszillierende Linearbewegung der Objektaufnahme relativ zur Basis hervorruft.

Mit der Erfindung besteht daher die Möglichkeit, das wenigstens eine Objekt durch den Schwingungserreger mit einer in Bezug auf das Reinigungsergebnis optimalen Erregerfrequenz fe, z.B. in der Eigenfrequenz ωe des Objekts, und/oder mit einer in Bezug auf das Reinigungsergebnis optimalen Erregeramplitude A anzuregen, wobei sich dann an dem wenigstens einen Objekt eine Schwingungsfrequenz f einstellt, die im Wesentlichen identisch mit der optimalen Erregerfrequenz fe ist. Ebenso stellt sich an dem wenigstens einen Objekt dann eine Schwingungsamplitude A ein, die im Wesentlichen identisch mit der optimalen Erregeramplitude A ist. Die optimale Erregerfrequenz fe und/oder die optimalen Erregeramplitude A des Schwingungserregers können beispielsweise durch Versuche festgestellt werden, beispielsweise dadurch, dass die Menge oder das Volumen des von dem wenigstens einen Objekts ab gereinigten Aufbaumaterials erregerfrequenzabhängig und/oder erregeramplitudenabhängig gemessen und dann daraus das jeweilige Maximum bestimmt wird.

In den Unteransprüchen sind vorteilhafte Weiterbildung der in Anspruch 1 angegebenen Erfindung definiert.

Vorzugsweise kann die bewegliche Lagerung der Objektaufnahme gegenüber der Basis in dem wenigstens einen, insbesondere rotatorischen und/oder linearen Freiheitsgrad eine mechanische Führung der Objektaufnahme an der Basis umfassen.

Insbesondere kann die mechanische Führung wenigstens eine (Dreh- und/oder Linear-) Führung oder (Dreh- und/oder Linear-) Lagerung durch wenigstens ein mechanisches Gelenk und/oder durch wenigstens eine (rotatorische und/oder lineare) Gleit- und/oder Wälzführung umfassen.

Auch kann die Objektaufnahme eine Spanneinrichtung für das wenigstens eine Objekt und/oder für eine Bauplattform des wenigstens einen Objekts und/oder für einen Baubehälter umfassen, welcher das wenigstens eine Objekt enthält. Die Spanneinrichtung ist daher insbesondere ausgebildet, um das wenigstens eine Objekt, eine Bauplattform des wenigstens einen Objekts oder einen Baubehälter, welcher das wenigstens eine Objekt enthält, zu spannen oder zu halten, wobei dadurch bevorzugt alle Freiheitsgrade des wenigstens einen Objekts gesperrt werden. Die Spanneinrichtung ist dabei beispielsweise ohne elastische Elemente ausgeführt, welche dem wenigstens einen Objekt, der Bauplattform des wenigstens einen Objekts oder des Baubehälters, welcher das wenigstens eine Objekt enthält, und der Spanneinrichtung zwischengeordnet sind, um das wenigstens eine Objekt zugunsten einer hohen Körperschallübertragung möglichst steif an die Spanneinrichtung anzubinden.

Der wenigstens eine Freiheitsgrad, in welchem die Objektaufnahme gegenüber der Basis beweglich gelagert oder geführt ist, kann insbesondere einen Drehfreiheitsgrad und/oder einen Translationsfreiheitsgrad umfassen.

Auch kann die Objektaufnahme gegenüber der Basis in wenigstens einem Freiheitsgrad derart beweglich gelagert oder geführt sein, dass die Objektaufnahme relativ zur Basis eine Linearbewegung und/oder eine Rotationsbewegung ausführen kann. Die Linearbewegung kann in wenigstens einer Raumachse der drei Raumachse X, Y und Z erfolgen und/oder in einer vertikalen oder horizontalen Ebene stattfinden. Ebenso kann die Rotationsbewegung um wenigstens eine Raumachse der drei Raumachsen X, Y oder Z herum erfolgen und/oder in einer vertikalen oder horizontalen Ebene stattfinden.

Gemäß einer besonders zu bevorzugenden Ausführungsform kann die Basis einen von einem von der elektronischen Steuerung gesteuerten ersten Drehantrieb um eine erste Rotationsachse rotatorisch angetriebenen Drehkörper aufweisen. Dieser Drehkörper kann beispielsweise als Drehteller ausgebildet sein.

Bevorzugt kann die elektronische Steuerung den ersten Drehantrieb derart steuern, dass die Basis hier beispielsweise in Form des Drehkörpers eine erste Rotation um die erste Drehachse innerhalb eines ersten Rotationswinkelbereichs ausführt, welcher beispielsweise 0 bis 360 Grad umfasst. Insbesondere kann die erste Rotation mehrere Vollumdrehungen (0 bis 360 Grad) der Basis, hier in Form des Drehkörpers umfassen.

Auch kann der Schwingungserreger einerseits an der Basis, hier dem Drehkörper und andererseits an der Objektaufnahme derart abgestützt sein, dass der ersten Rotation der Basis eine zweite Rotation der Objektaufnahme relativ zur Basis beispielsweise um die erste Rotationsachse überlagert ist. Mit anderen Worten rotiert dann die beispielsweise als Drehteller ausgebildete Basis mit der ersten Rotation um die erste Rotationsachse, wobei gleichzeitig die Objektaufnahme relativ zur Basis in der zweiten Rotation beispielsweise ebenfalls um die erste Rotationsachse rotiert.

Die zweite Rotation stellt bevorzugt eine hin- und hergehende oder oszillierende Rotation innerhalb eines zweiten Rotationswinkelbereichs beispielsweise um die erste Rotationsachse oder um eine beliebige Rotationsachse herum dar. Diese oszillierende Rotation erfolgt bevorzugt mit der Erregerfrequenz fe und/oder mit der Erregeramplitude Ae des Schwingungserregers, welcher sich einerseits an der Objektaufnahme und andererseits an der Basis abstützt. Die oszillierende Rotation findet dann in Bezug auf die Basis, wenn diese beispielsweise als Drehkörper ausgebildet ist, in Umfangsrichtung statt. Der zweite Rotationswinkelbereich kann beispielsweise einen Winkelbereich größer als 0 Grad und kleiner als 90 Grad umfassen. Alternativ kann der zweite Rotationswinkelbereich einen beliebigen Winkelbereich zwischen größer als 0 Grad und 360 Grad umfassen.

Auch kann die beispielsweise als Drehkörper ausgebildete Basis an einem Schwenkarm durch einen ersten Drehantrieb um die erste Rotationsachse rotatorisch antreibbar gelagert sein. Weiterhin kann zusätzlich ein zweiter Drehantrieb vorgesehen sein, der von der elektronischen Steuerung derart gesteuert ist, dass der Schwenkarm um eine zweite Rotationsachse rotatorisch angetrieben wird. Auf diese Weise kann das an der Objektaufnahme aufgenommene wenigstens eine Objekt verschiedene räumliche Winkelpositionen einnehmen, wodurch beispielsweise in Kanälen des Objekts verbliebenes, unverfestigtes Aufbaumaterial in günstigen Winkelpositionen aus den Kanälen abfließen kann.

Gemäß einer weiteren Ausführungsform kann die Basis wenigstens ein statisches oder stationäres Element der Vorrichtung umfassen. Statisches oder stationäres Element bedeutet, dass dieses Element im Gegensatz zu der als Drehkörper ausgebildeten Basis der bevorzugten Ausführungsform einen stationären, unbeweglichen oder statischen Bestandteil der Vorrichtung darstellt und beispielsweise durch eine Struktur, ein tragendes Element, eine Wandung und/oder ein Gehäuse der Vorrichtung gebildet wird. Die Objektaufnahme kann sich dann relativ zur statischen oder stationären Basis in dem wenigstens einen insbesondere translatorischen und/oder rotatorischen Freiheitsgrad geführt bewegen und insbesondere eine Rotation und/oder eine Translation in Bezug zu dieser festen Basis ausführen.

Der Schwingungserreger kann insbesondere einen Linearaktuator und/oder einen rotierenden Exzenterantrieb umfassen. Ein Linearaktuator kann von der elektronischen Steuerung beispielsweise angesteuert werden, dass er sich periodisch abwechselnd verlängert und verkürzt, so dass, wenn er einerseits an der Basis und andererseits an der Objektaufnahme abgestützt oder gelagert ist, die Objektaufnahme relativ zur Basis hin- und herschwingt oder oszilliert. Der Schwingungserreger kann insbesondere einen piezoelektrischen Schwingungserreger umfassen, welcher ein elektrisches Anregungssignal piezomechanisch in eine Schwingungsbewegung umsetzt. Dabei wird durch die Betriebsspannung des Schwingungserregers die Erregeramplitude Ae und durch den Erregerstrom die Erregerfrequenz fe bestimmt.

Auch kann durch die elektronische Steuerung eine Erregerfrequenz fₑ und/oder eine Erregeramplitude Aₑ vorgebbar sein, mit welcher der Schwingungserreger die Objektaufnahme zu Schwingungen erregt. Insbesondere ist (sind) die Erregerfrequenz fₑ und/oder die Erregeramplitude Aₑ parametrierbar.

Bevorzugt ist der Schwingungserreger durch die elektronische Steuerung derart gesteuert, dass im Laufe eines Reinigungsvorgangs oder im Laufe eines Reinigungszyklus die Erregerfrequenz fₑ und/oder die Erregeramplitude Aₑ konstant ist. Alternativ kann im Laufe eines Reinigungsvorgangs oder im Laufe eines Reinigungszyklus die Erregerfrequenz fₑ und/oder die Erregeramplitude Aₑ variabel sein.

Auch kann die Vorrichtung eine geschlossene Reinigungskammer aufweisen, in welcher wenigstens die Basis und die Objektaufnahme sowie der Schwingungserreger angeordnet sind.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### Zeichnung

Nachstehend sind Ausführungsbeispiel der Erfindung in der Zeichnung dargestellt und in der nachfolgenden Beschreibung näher erläutert. In der Zeichnung zeigt
- Fig. 1: eine perspektivische Ansicht einer Vorrichtung zum Trennen von additiv hergestellten Objekten von unverfestigt verbliebenem Aufbaumaterial gemäß dem Stand der Technik;
- Fig. 2: eine Seitenansicht eines Teils einer Vorrichtung zum Trennen von additiv hergestellten Objekten von unverfestigt verbliebenem Aufbaumaterial gemäß einer bevorzugten Ausführungsform der Erfindung;
- Fig. 3: eine perspektivische Ansicht von unten auf den Teil der Vorrichtung von Fig. 2;
- Fig. 4: eine perspektivische Teilschnittdarstellung des Teils der Vorrichtung von Fig. 2;
- Fig. 5: eine perspektivische Teilschnittdarstellung der Vorrichtung gemäß der bevorzugten Ausführungsform;
- Fig. 6: eine Seitenansicht eines Teils einer Vorrichtung zum Trennen von additiv hergestellten Objekten von unverfestigt verbliebenem Aufbaumaterial gemäß einer weiteren Ausführungsform der Erfindung;
- Fig. 7: eine Seitenansicht eines Teils einer Vorrichtung zum Trennen von additiv hergestellten Objekten von unverfestigt verbliebenem Aufbaumaterial gemäß einer bevorzugten Ausführungsform der Erfindung;
- Fig. 8: eine Seitenansicht eines Teils einer Vorrichtung zum Trennen von additiv hergestellten Objekten von unverfestigt verbliebenem Aufbaumaterial gemäß einer bevorzugten Ausführungsform der Erfindung.

### Beschreibung der Ausführungsbeispiele

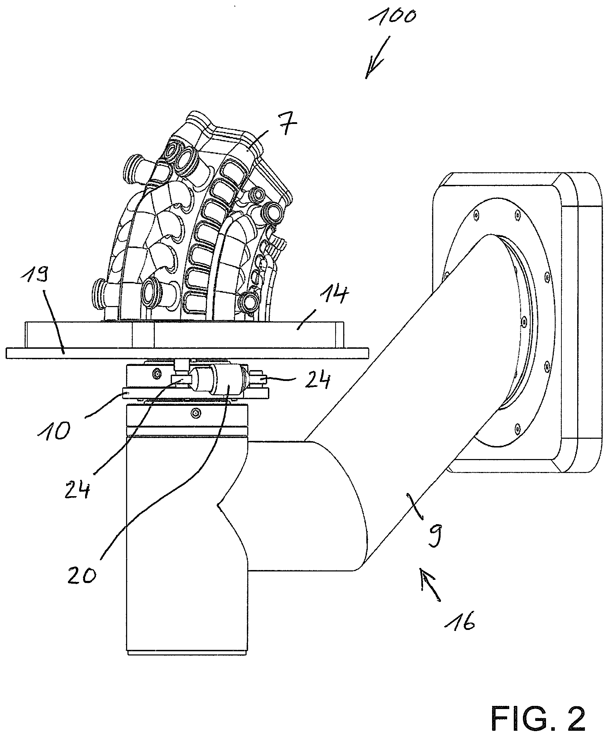

**Fig. 2** zeigt eine perspektivische Ansicht einer bevorzugten Ausführungsform einer Reinigungsvorrichtung 100 gemäß der Erfindung, durch welche unverfestigt gebliebenes pulverförmiges Aufbaumaterial von einem dreidimensionalen Objekt 7 samt Bauplattform 14 gereinigt wird. Das Objekt 7, beispielsweise ein Bauteil oder ein Modell ist auf der Bauplattform 14 durch schichtweises Aufbringen und selektives Verfestigen des pulverförmigen Aufbaumaterials als Einheit hergestellt worden. Im hier vorliegenden Fall wurde das selektive Verfestigen des pulverförmigen Aufbaumaterials mittels energiereicher Strahlung, hier insbesondere mittels einer Lasersinterung (Laserstrahlung) vorgenommen.

Die Reinigung soll hier lediglich das Entfernen von Restpulver betreffen, welches nach dem Auspacken des Objekts 7 und der Bauplattform 14 aus dem Pulverkuchen noch anhaftet. Die Reinigungsvorrichtung 100 wird beispielsweise durch eine hier nicht gezeigte elektronische Steuerung in koordinierter Weise gesteuert, welche eine CPU beinhaltet, deren Betrieb durch ein Computerprogramm gesteuert wird.

Der Bauprozess und der Reinigungsprozess werden hier beispielsweise an voneinander getrennten Orten und in voneinander getrennten Vorrichtungen, der Bauprozess nämlich in einer hier nicht gezeigten Schichtbauvorrichtung und der Reinigungsprozess in der hier beschriebenen und gezeigten Reinigungsvorrichtung 100 vollzogen.

Das Objekt 7 ist hier beispielsweise über die Bauplattform 14 zumindest während des Reinigungsprozesses in der Reinigungsvorrichtung 100 in einer hier nicht explizit gezeigten Spanneinrichtung 19 lösbar eingespannt, welche daher eine Objektaufnahme der Reinigungsvorrichtung 100 darstellt. Alternativ könnte auch das Objekt 7 ohne Bauplattform 14 oder ein Baubehälter, welcher wenigstens ein Objekt 7 enthält, in der Spanneinrichtung 19 eingespannt sein.

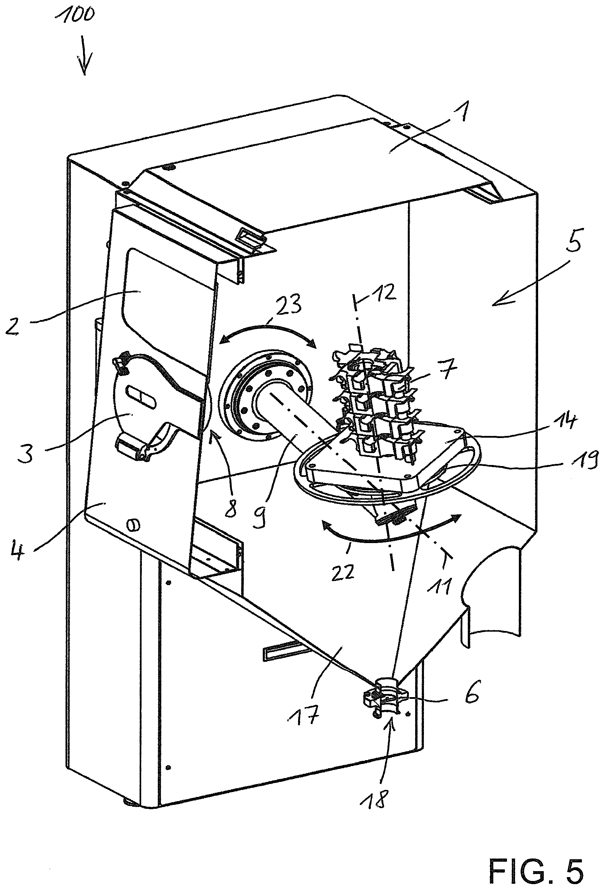

Die Reinigungsvorrichtung 100 umfasst eine in **Fig. 5** aufgeschnitten dargestellte staubdichte Reinigungskammer 5, in welcher der Reinigungsprozess des Objekts 7 samt Bauplattform 14 stattfindet und welche eine durch eine Fronttüre 4 verschließbare Frontöffnung zum Be- und Entladen des Objekts 7 samt Bauplattform 14 aufweist. Die Fronttüre 4 ist mit einer Handschuhklappe 3 mit Handschuheingriffen 8 versehen, damit eine Bedienperson von außerhalb in die Reinigungskammer 5 eingreifen kann, beispielsweise um am Objekt 7 zu hantieren, ohne dass sie mit dem Pulver in Kontakt kommt. Mittels einer in der Fronttüre 4 ausgeführten Sichtscheibe 2 kann eine Bedienperson außerdem den Reinigungsprozess beobachten. Weiterhin weist die Reinigungskammer 5 eine Dachklappe 1 auf.

Die Reinigungskammer 5 weist beispielsweise einen sich nach unten trichterförmig verengenden Boden 17 auf, an dessen trichterförmiger Mündung eine Auslassöffnung 18 für von dem Objekt 7 und der Bauplattform 14 abgereinigtem Pulver ausgebildet ist. An die Auslassöffnung 18 kann beispielsweise ein Sammelbehälter für das Pulver staubdicht angeschlossen werden. Die Auslassöffnung 18 ist hier beispielsweise durch ein Ventil 6, insbesondere ein Scheibenventil staubdicht verschließbar, welches eine Öffnungs- und Schließposition aufweist.

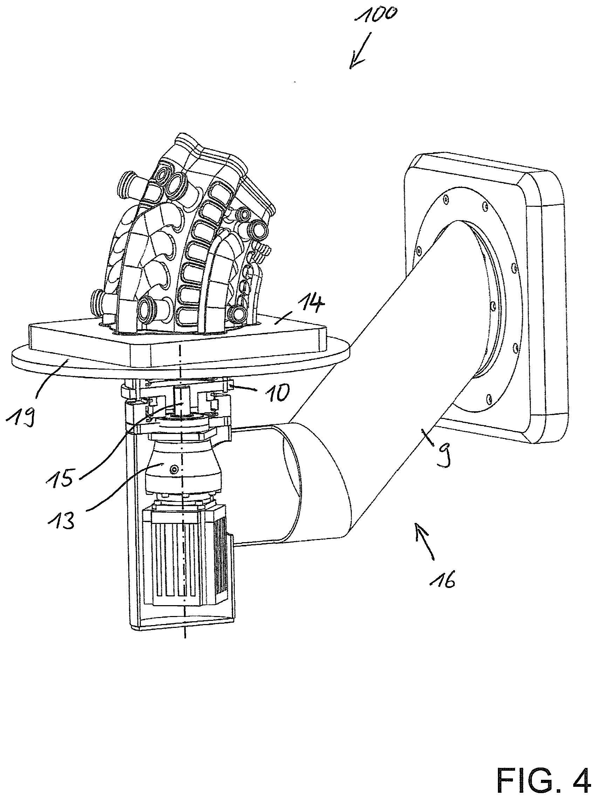

Wie insbesondere **Fig. 4** und **Fig. 5** zeigen, ist ein hier beispielsweise als Drehteller 10 ausgebildeter Drehkörper hier beispielsweise um eine erste Rotationsachse 12 mittels eines ersten Motors 13 rotatorisch antreibbar, insbesondere in einem Winkelbereich von 0 bis 360 Grad, wie der erste teilkreisförmige Pfeil 22 in **Fig. 5** symbolisiert. Genauer ist ein Ende einer ersten Motorwelle 15 des ersten Motors 13 in einer zentralen Öffnung des Drehtellers 10 drehfest verbunden, wie anhand von **Fig. 4** ersichtlich ist.

Weiterhin ist der Drehteller 10 an einem Schwenkarm 9 gelagert, der seinerseits um eine zweite Rotationsachse 11 mittels eines hier nicht gezeigten zweiten Motors drehbar angetrieben ist, wie der zweite teilkreisförmige Pfeil 23 in **Fig. 5** symbolisiert, wobei die zweite Rotationsachse 11 hier beispielsweise senkrecht zur ersten Rotationsachse 12 ist. Die zweite Rotationsachse 11 ist hier beispielsweise in einer horizontalen Ebene angeordnet. Der Schenkarm 9 ist hier beispielsweise mit seinem ersten Ende in einem in einer beispielsweise vertikalen Wandung der Reinigungskammer 5 angeordneten ersten Drehlager drehbar gelagert, wobei das zweite Ende des Schwenkarms 9 beispielsweise frei auskragt. Alternativ könnte auch das zweite Ende des Schwenkarms 9 in einem zweiten Drehlager drehbar sein, welches dann in einer gegenüberliegenden Wandung der Reinigungskammer 5 angeordnet ist.

Der Drehteller 10 wird durch den ersten Motor 13 um die erste Rotationsachse 12 beispielsweise in einem Winkelbereich von 0 Grad bis 360 Grad und der Schwenkarm 9 durch den zweiten Motor um die zweite Rotationsachse 11 in einem zweiten Winkelbereich von beispielsweise 0 Grad bis 360 Grad drehbar angetrieben. Möglich sind jeweils auch Drehbewegungen von mehr als 360 Grad, beispielsweise um jeweils mehrere Vollumdrehungen auszuführen. Der Schwenkbereich soll sich in beiden Fällen von 0 Grad bis 360 Grad (Vollrotation) erstecken, wobei neben einer einmaligen Teil- oder Vollrotation auch mehrere Teil- oder Vollrotationen vorgesehen sind.

Der erste Motor 13 und der zweite Motor sind bevorzugt Servomotoren, welche von der elektronischen Steuerung gesteuert oder geregelt werden, um stufenlos beliebige Schwenkstellungen des Schwenkarms 9 und des Drehtellers 10 und damit des Objekts 7 samt Bauplattform 14 einzustellen oder einzuregeln. Dadurch kann das auf dem Drehteller 10 gespannte Objekt 7 zusammen mit der Bauplattform 14 in eine Vielzahl von Schwenkpositionen gedreht werden, was ein Lösen von losem, nicht verfestigtem pulverförmigen Aufbaumaterial durch die Reinigungsvorrichtung 100 fördert. Die beiden Motoren, der Drehteller 9 und der Schwenkarm 9 sowie hier nicht gezeigte Drehlagerungen samt Gehäuse bilden zusammen eine Schwenkeinrichtung 16 der Reinigungsvorrichtung 100 aus, welche von der elektronischen Steuerung gesteuert oder geregelt wird.

Zwischen dem Drehteller 10 und der Spanneinrichtung 19 ist außerdem ein von der elektronischen Steuerung gesteuerter Schwingungserreger 20, hier beispielsweise in Form eines Linearaktuators angeordnet, durch welchen das auf in der Spanneinrichtung 19 gespannte Objekt 7 samt Bauplattform 14 zu Schwingungen einer bestimmten Schwingungsfrequenz fe und einer bestimmten Schwingungsamplitude A anregbar ist. Wenigstens die vom Linearaktuator 20 erzeugte Erregerfrequenz fe und Erregeramplitude Ae können mittels der elektronischen Steuerung vorgegeben und bedarfsweise variiert werden, indem diese mit entsprechenden Signalen den Linearaktuator 20 steuert. Da der Schwingungserreger 20 mit der Spanneinrichtung 19 mechanisch steif verbunden ist und auch das Objekt 7 von der Spanneinrichtung 19 mechanisch steif gespannt wird, ist die Schwingungsfrequenz f des Objekts 7 im Wesentlichen identisch mit der vom Linearaktuator 20 erzeugten Erregerfrequenz fe und die Schwingungsamplitude A des Objekts 7 im Wesentlichen identisch mit der vom Linearaktuator 20 erzeugten Erregeramplitude Ae. Der Körperschall wird dann vom Linearaktuator 20 durch Körperkontakte auf das Objekt übertragen.

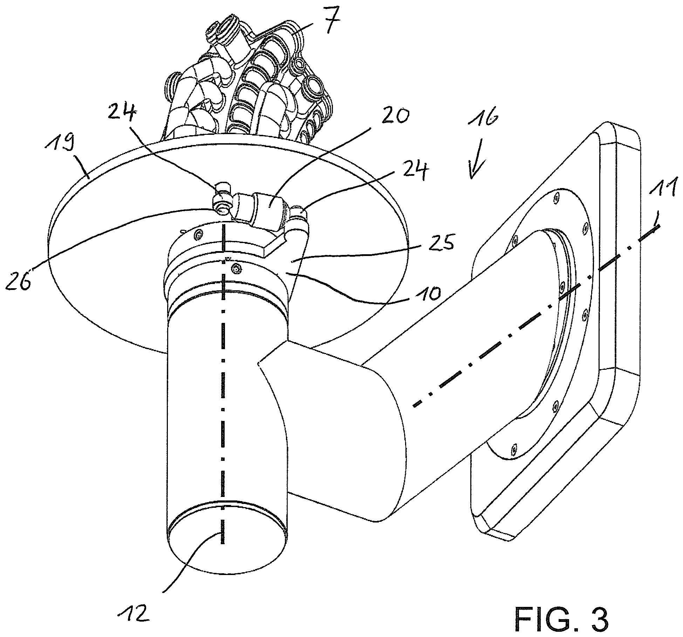

Wie insbesondere aus **Fig. 2** bis **Fig. 4** hervorgeht, ist der Linearaktuator 20 einerseits an einem radial auskragenden Arm 25 des Drehtellers 10 und andererseits an einem axial vorspringenden Zapfen 26 der Spanneinrichtung 19 jeweils durch ein Gelenk 24 gelenkig gelagert, wobei der Linearaktuator 20 tangential zur Umfangsrichtung in Bezug auf die erste Rotationsachse 12 angeordnet ist. Der Linearaktuator 20 ist hier beispielsweise sich entlang eines linearen Hubs periodisch verlängernder und verkürzender Aktuator, wenn er entsprechend von der elektronischen Steuerung hierzu angesteuert wird.

Wenn der Linearaktuator von der elektronischen Steuerung zu solchen periodischen und oszillierenden Hubbewegungen angesteuert wird, ist leicht vorstellbar, dass der ersten Rotation des Drehtellers 10 um die erste Rotationsachse 12 relativ zum Schwenkarm 9 eine oszillierende zweite Rotation der Spanneinrichtung 19 relativ zum Drehteller 10 hier beispielsweise ebenfalls um die erste Rotationsachse 12 überlagert wird. Mit anderen Worten rotiert dann der Drehteller 10 um die erste Rotationsachse 12 beispielsweise in mehreren Vollumdrehungen, während gleichzeitig die Spanneinrichtung 19 relativ zum Drehteller 10 hier beispielsweise ebenfalls um die erste Rotationsachse 12 hin- und her rotiert bzw. rotierend oszilliert. Diese oszillierende zweite Rotation der Spanneinrichtung 19 in Bezug zum Drehteller 10 findet dann hier beispielsweise bezüglich der ersten Rotationsachse 12 in Umfangsrichtung statt.

Diese oszillierende zweite Rotation der Spanneinrichtung 19 in Bezug zum Drehteller 10 erfolgt dann mit der vom Linearaktuator 20 erzeugten Erregerfrequenz fe und Erregeramplitude Ae des hier beispielsweise linearen Hubs. Ein zweiter Rotationswinkelbereich der oszillierenden zweiten Rotation kann beispielsweise einen Winkelbereich größer als 0 Grad und kleiner als 90 Grad umfassen. Insbesondere sind die Erregerfrequenz fe und die Erregeramplitude Ae des oszillierenden linearen Hubs des Linearaktuators 20 durch die elektronische Steuerung parametrierbar und können beispielsweise über eine Benutzeroberfläche der elektronischen Steuerung vorgegeben werden.

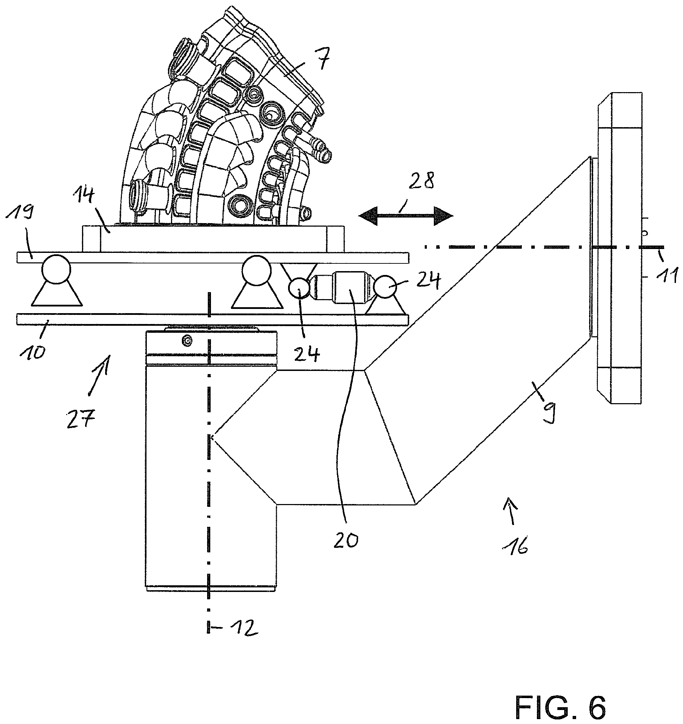

**Fig. 6** zeigt eine Seitenansicht einer Reinigungsvorrichtung 100 gemäß einer weiteren Ausführungsform der Erfindung. Dort ist die Spanneinrichtung 19 durch eine Lineargleitführung 27 gegenüber dem Drehteller 10 linear verschieblich gelagert, wobei die durch den Linearaktuator hervorgerufene hier lineare oszillierende Relativbewegung durch einen dritten Pfeil 28 symbolisiert wird. Bei diesem Ausführungsbeispiel ist der Linearaktuator 20 wie bei dem bevorzugten Ausführungsbeispiel ausgebildet und kann sich, durch die elektronische Steuerung gesteuert, in einer linearen Hubbewegung unter einer Erregerfrequenz fe und mit einer Erregeramplitude Ae periodisch verlängern und verkürzen. Der Linearaktuator 20 ist mit seinem einen Ende an dem Drehteller 10 und mit seinem anderen Ende an der Spanneinrichtung 19 gelenkig gelagert. Folglich resultieren die periodischen Verlängerungen und Verkürzungen des Linearaktuators 20 in einer durch einen dritten Pfeil 28 symbolisierten, linearen oszillierenden Relativbewegung der Spanneinrichtung 19 in Bezug zum Drehteller 10, welcher sich um die erste Rotationsachse 12 dreht. Zusätzlich kann sich auch hier der Schwenkarm 9, an welchem der Drehteller 10 rotatorisch gelagert ist, um die zweite Rotationsachse 11 drehen.

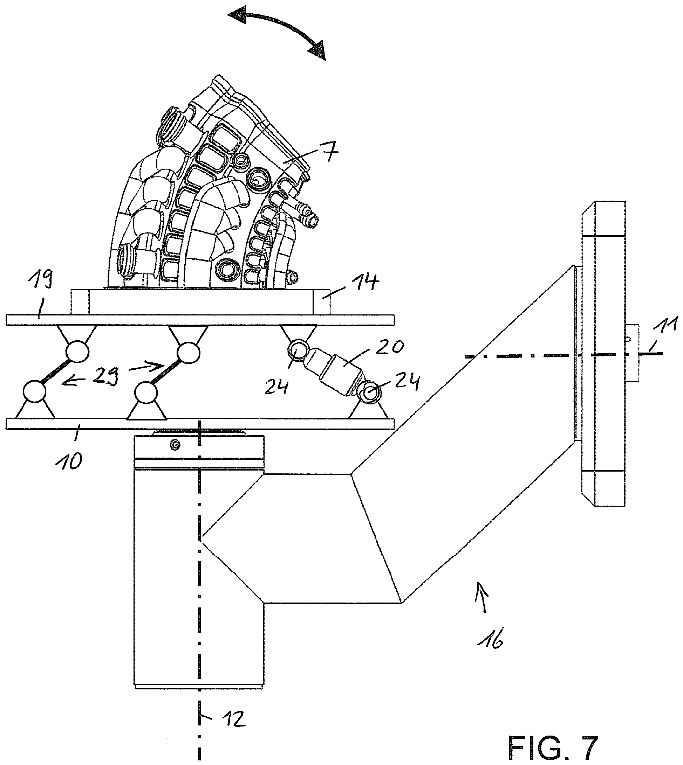

Während bei der Ausführungsform von **Fig. 6** die oszillierende Hubbewegung des Linearaktuators 20 in einer Ebene senkrecht zur ersten Rotationsachse 12 stattfindet, ist bei dem Ausführungsbeispiel von **Fig. 7** die Hubbewegung des Linearaktuators schräg, insbesondere spitzwinkelig in Bezug zu einer Ebene senkrecht zur ersten Rotationsachse 12. Weiterhin ist im Unterschied zu **Fig. 6** die Spanneinrichtung 19 gegenüber dem Drehteller 10 durch eine Drehgelenkführung 29 rotatorisch gelagert. Die Spanneinrichtung 19 rotiert dann in einer hin- und hergehenden oder oszillierenden Relativbewegung in Bezug zum Drehteller 10 infolge der periodischen Verlängerungen und Verkürzungen des Linearaktuators 20, wie der vierte Pfeil 30 in **Fig. 7** symbolisiert.

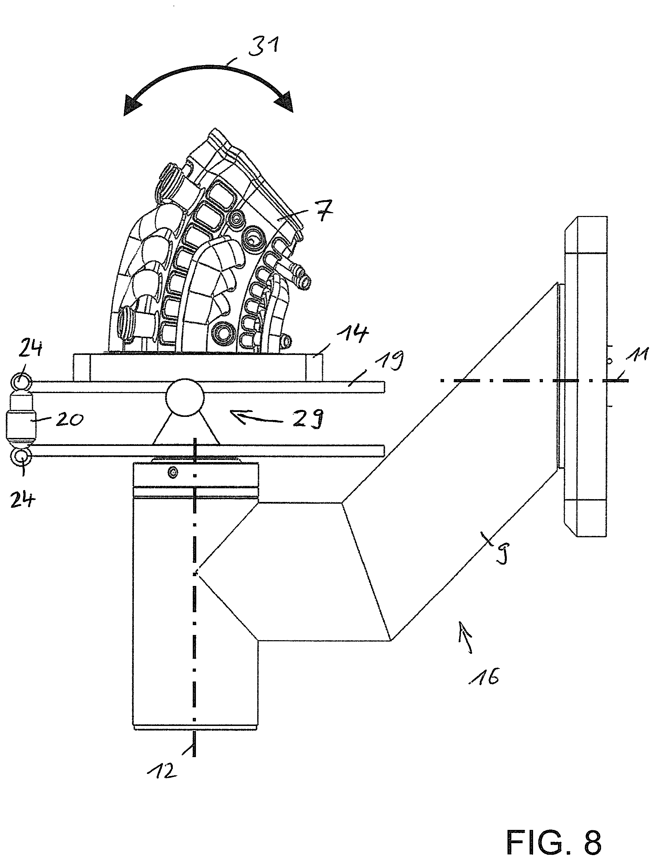

Bei der weiteren Ausführungsform von **Fig. 8** ist ebenfalls die Spanneinrichtung 19 gegenüber dem Drehteller 10 durch eine Drehgelenkführung 29 rotatorisch gelagert oder geführt. Die Spanneinrichtung 19 rotiert dann in einer oszillierenden Rotation in Bezug zum Drehteller 10 infolge der periodischen Verlängerungen und Verkürzungen des Linearaktuators 20 entlang der durch die Drehgelenkführung 29 vorgegebenen Bahn, wie der fünfte Pfeil 31 in **Fig. 8** symbolisiert.

### Bezugszahlenliste

- 100: Reinigungsvorrichtung
- 1: Dachklappe
- 2: Sichtscheibe
- 3: Handschuhklappe
- 4: Fronttüre
- 5: Reinigungskammer
- 6: Ventil
- 7: Objekt
- 8: Handschuheingriffe
- 9: Schwenkarm
- 10: Drehteller, Basis
- 11: zweite Rotationsachse
- 12: erste Rotationsachse
- 13: erster Motor
- 14: Bauplattform
- 15: erste Motorwelle
- 16: Schwenkeinrichtung
- 17: Boden
- 18: Auslassöffnung
- 19: Spanneinrichtung, Objektaufnahme
- 20: Linearaktuator, Schwingungserreger
- 21: Gummielemente
- 22: erster Pfeil
- 23: zweiter Pfeil
- 24: Gelenke
- 25: Arm
- 26: Zapfen
- 27: Lineargleitführung
- 28: dritter Pfeil
- 29: Drehgelenkführung
- 30: vierter Pfeil
- 31: fünfter Pfeil
- fe: Erregerfrequenz des Schwingungserregers
- f: Schwingungsfrequenz des Objekts
- Ae: Erregeramplitude des Schwingungserregers
- A: Schwingungsamplitude des Objekts
- ωₑ: Eigenfrequenz des Objekts

## Patentansprüche

1. Reinigungsvorrichtung (100) zum Trennen von unverfestigt verbliebenem Aufbaumaterial von wenigstens einem durch schichtweises Aufbringen und selektives Verfestigen des Aufbaumaterials im Rahmen eines generativen Bauprozesses entstandenen Objekts (7), welche wenigstens Folgendes aufweist:
a) Eine Objektaufnahme (19), welche ausgebildet ist zum Aufnehmen des wenigstens einen Objekts (7), einer Bauplattform (14) des wenigstens einen Objekts oder eines Baubehälters, welcher das wenigstens eine Objekt (7) enthält,
b) eine elektronische Steuerung, und
c) einen von der elektronischen Steuerung gesteuerten Schwingungserreger (20), welcher von der elektronischen Steuerung derart gesteuert ist, dass er wenigstens die Objektaufnahme (19) zu Schwingungen anregt, um im Rahmen eines Reinigungsprozesses unverfestigt verbliebenes Aufbaumaterial von dem wenigstens einen, an oder in der Objektaufnahme (19) aufgenommenen Objekt (7) zu trennen, **dadurch gekennzeichnet, dass**
d) die Objektaufnahme (19) gegenüber einer Basis (10) in wenigstens einem Freiheitsgrad beweglich gelagert oder geführt ist, und dass
e) der Schwingungserreger (20) zwischen der Objektaufnahme (19) und der Basis (10) angeordnet ist und die Objektaufnahme (19) in dem wenigstens einen Freiheitsgrad zu Schwingungen anregt, indem er sich einerseits an der Objektaufnahme (19) und andererseits an der Basis (10) abstützt.

2. Reinigungsvorrichtung nach einem der vorhergehenden Ansprüche, **dadurch gekennzeichnet, dass** die bewegliche Lagerung oder Führung der Objektaufnahme (19) gegenüber der Basis (10) in dem wenigstens einen Freiheitsgrad eine mechanische Führung der Objektaufnahme (19) an der Basis (10) umfasst.

3. Reinigungsvorrichtung nach Anspruch 2, **dadurch gekennzeichnet, dass** die mechanische Führung wenigstens eine Führung oder Lagerung durch wenigstens ein mechanisches Gelenk (24) und/oder wenigstens eine rotatorische und/oder lineare Gleit- und/oder Wälzführung (27, 29) umfasst.

4. Reinigungsvorrichtung nach einem der vorhergehenden Ansprüche, **dadurch gekennzeichnet, dass** die Objektaufnahme (19) eine Spanneinrichtung für das wenigstens eine Objekt (7) und/oder für eine Bauplattform (14) des wenigstens einen Objekts (7) umfasst.

5. Reinigungsvorrichtung nach einem der vorhergehenden Ansprüche, **dadurch gekennzeichnet, dass** der wenigstens eine Freiheitsgrad einen Drehfreiheitsgrad und/oder einen Translationsfreiheitsgrad umfasst.

6. Reinigungsvorrichtung nach einem der vorhergehenden Ansprüche, **dadurch gekennzeichnet, dass** die Objektaufnahme (19) gegenüber der Basis (10) in dem wenigstens einen Freiheitsgrad derart beweglich oder geführt gelagert ist, dass die Objektaufnahme (19) relativ zur Basis (10) eine Linearbewegung und/oder eine Rotationsbewegung ausführen kann.

7. Reinigungsvorrichtung nach einem der vorhergehenden Ansprüche, **dadurch gekennzeichnet, dass** die Basis (10) einen von einem von der elektronischen Steuerung gesteuerten ersten Drehantrieb (13) um eine erste Rotationsachse (12) rotatorisch angetriebenen Drehkörper aufweist.

8. Reinigungsvorrichtung nach Anspruch 7, **dadurch gekennzeichnet, dass** die elektronische Steuerung den ersten Drehantrieb (13) derart steuert, dass die Basis (10) eine erste Rotation um die erste Rotationsachse (12) innerhalb eines ersten Rotationswinkelbereichs ausführt.

9. Reinigungsvorrichtung nach Anspruch 7 oder 8, **dadurch gekennzeichnet, dass** der Schwingungserreger (20) einerseits an der Basis (10) und andererseits an der Objektaufnahme (19) derart abgestützt ist, dass der ersten Rotation der Basis (10) eine zweite Rotation der Objektaufnahme (19) relativ zur Basis (10) vorzugsweise um die erste Rotationsachse (12) überlagert ist.

10. Reinigungsvorrichtung nach Anspruch 9, **dadurch gekennzeichnet, dass** die zweite Rotation eine oszillierende Rotation innerhalb eines zweiten Rotationswinkelbereichs darstellt.

11. Reinigungsvorrichtung nach einem der Ansprüche 7 bis 10, **dadurch gekennzeichnet, dass** die Basis (10) an einem Schwenkarm (9) um die erste Rotationsachse (12) rotatorisch antreibbar gelagert ist, wobei ein zweiter Drehantrieb vorgesehen ist, der von der elektronischen Steuerung derart gesteuert ist, dass der Schwenkarm (9) um eine zweite Rotationsachse (11) rotatorisch angetrieben wird.

12. Reinigungsvorrichtung nach einem der Ansprüche 1 bis 6, **dadurch gekennzeichnet, dass** die Basis wenigstens ein statisches oder stationäres Element der Vorrichtung umfasst.

13. Reinigungsvorrichtung nach einem der vorhergehenden Ansprüche, **dadurch gekennzeichnet, dass** der Schwingungserreger (20) einen Linearaktuator und/oder einen rotierenden Exzenterantrieb umfasst.

14. Reinigungsvorrichtung nach einem der vorhergehenden Ansprüche, **dadurch gekennzeichnet, dass** durch die elektronische Steuerung eine Erregerfrequenz (fₑ) und/oder eine Erregeramplitude (Aₑ) für den Schwingungserreger (20) vorgebbar oder parametrierbar ist, mit welcher der an der Basis (10) abgestützte Schwingungserreger (20) die Objektaufnahme (19) zu Schwingungen erregt.

15. Reinigungsvorrichtung nach Anspruch 13, **dadurch gekennzeichnet, dass** der Schwingungserreger (20) durch die elektronische Steuerung derart gesteuert ist, dass im Laufe eines Reinigungsvorgangs oder im Laufe eines Reinigungszyklus die Erregerfrequenz (fₑ) und/oder die Erregeramplitude (Aₑ) konstant ist.

16. Reinigungsvorrichtung nach einem der vorhergehenden Ansprüche, **dadurch gekennzeichnet, dass** sie eine geschlossene Reinigungskammer (14) aufweist, in welcher wenigstens die Basis (10), die Objektaufnahme (19) und der Schwingungserreger (20) angeordnet sind.

## Claims

1. Cleaning device (100) for separating unsolidified remaining build-up material from at least one object (7) created by layer-by-layer application and selective solidification of the build-up material as part of a generative building process, having at least the following:
a) an object holder (19) which is designed to hold the at least one object (7), a building platform (14) of the at least one object or a building container which contains the at least one object (7),
b) an electronic control, and
c) a vibration exciter (20) controlled by the electronic control, which is controlled by the electronic control in such a way that it excites at least the object holder (19) to vibrate in order to separate unsolidified remaining build-up material from the at least one object (7) which is held on or in the object holder (19) as part of a cleaning process, **characterized in that**
d) the object holder (19) is mounted or guided movably relative to a base (10) in at least one degree of freedom, and that
e) the vibration exciter (20) is arranged between the object holder (19) and the base (10) and excites the object holder (19) to vibrate in the at least one degree of freedom, **in that** it is supported on the object holder (19) on the one hand and, on the other hand, on the base (10).

2. Cleaning device according to any one of the preceding claims, **characterized in that** the movable mounting or guide of the object holder (19) relative to the base (10) in the at least one degree of freedom comprises mechanical guide of the object holder (19) on the base (10).

3. Cleaning device according to claim 2, **characterized in that** the mechanical guide comprises at least one guide or mounting by at least one mechanical joint (24) and/or at least one rotary and/or linear sliding and/or roller guide (27, 29).

4. Cleaning device according to any one of the preceding claims, **characterized in that** the object holder (19) comprises a clamping apparatus for the at least one object (7) and/or for a building platform (14) of the at least one object (7).

5. Cleaning device according to any one of the preceding claims, **characterized in that** the at least one degree of freedom comprises a rotational degree of freedom and/or a translational degree of freedom.

6. Cleaning device according to any one of the preceding claims, **characterized in that** the object holder (19) is mounted movably or guided relative to the base (10) in the at least one degree of freedom in such a way that the object holder (19) has a linear movement relative to the base (10) and/or can carry out a rotational movement.

7. Cleaning device according to any one of the preceding claims, **characterized in that** the base (10) has a rotating body driven in rotation about a first axis of rotation (12) by a first rotary drive (13) controlled by the electronic control.

8. Cleaning device according to claim 7, **characterized in that** the electronic control controls the first rotary drive (13) such that the base (10) carries out a first rotation about the first axis of rotation (12) within a first rotational angle range.

9. Cleaning device according to claim 7 or 8, **characterized in that** the vibration exciter (20) is supported on the one hand on the base (10) and on the other hand on the object holder (19) in such a way that a second rotation of the object holder (19) relative to the base (10), preferably about the first axis of rotation (12), is superimposed on the first rotation of the base (10).

10. Cleaning device according to claim 9, **characterized in that** the second rotation represents an oscillating rotation within a second rotational angle range.

11. Cleaning device according to any one of claims 7 to 10, **characterized in that** the base (10) is mounted on a swivel arm (9) so that it can be driven in rotation about the first axis of rotation (12), wherein a second rotary drive is provided which is controlled by the electronic control in such a way that the swivel arm (9) is driven in rotation about a second axis of rotation (11).

12. Cleaning device according to any one of claims 1 to 6, **characterized in that** the base comprises at least one static or stationary element of the device.

13. Cleaning device according to any one of the preceding claims, **characterized in that** the vibration exciter (20) comprises a linear actuator and/or a rotating eccentric drive.

14. Cleaning device according to any one of the preceding claims, **characterized in that** an excitation frequency (fₑ) and/or an excitation amplitude (Aₑ) for the vibration exciter (20) can be specified or parameterized by the electronic control, with which the vibration exciter (20) supported on the base (10) excites the object holder (19) to vibrate.

15. Cleaning device according to claim 13, **characterized in that** the vibration exciter (20) is controlled by the electronic control in such a way that in the course of a cleaning process or in the course of a cleaning cycle, the excitation frequency (fₑ) and/or the exciter amplitude (Aₑ) is constant.

16. Cleaning device according to any one of the preceding claims, **characterized in that** it has a closed cleaning chamber (14) in which at least the base (10), the object holder (19) and the vibration exciter (20) are arranged.

## Revendications

1. Dispositif de nettoyage (100) pour la séparation de matériau de construction resté non consolidé d'au moins un objet (7) apparu par application par couches et consolidation sélective du matériau de construction dans le cadre d'un processus de construction génératif, dispositif qui présente au moins ce qui suit :
a) un logement d'objet (19) qui est réalisé pour la réception de l'au moins un objet (7), d'une plateforme de construction (14) de l'au moins un objet ou d'un récipient de construction qui contient l'au moins un objet (7),
b) une commande électronique, et
c) un excitateur d'oscillations (20) commandé par la commande électronique, excitateur qui est commandé par la commande électronique de telle manière qu'il excite au moins le logement d'objet (19) pour le faire osciller afin de séparer dans le cadre d'un processus de nettoyage du matériau de construction resté non consolidé de l'au moins un objet (7) reçu au niveau ou dans le logement d'objet (19), **caractérisé en ce que**
d) le logement d'objet (19) est logé ou guidé de manière mobile par rapport à une base (10) dans au moins un degré de liberté, et **en ce que**
e) l'excitateur d'oscillations (20) est agencé entre le logement d'objet (19) et la base (10) et excite le logement d'objet (19) dans l'au moins un degré de liberté pour le faire osciller **en ce qu'**il s'appuie d'une part contre le logement d'objet (19) et d'autre part contre la base (10).

2. Dispositif de nettoyage selon l'une quelconque des revendications précédentes, **caractérisé en ce que** le logement mobile ou le guidage du logement d'objet (19) par rapport à la base (18) dans l'au moins un degré de liberté comprend un guidage mécanique du logement d'objet (19) au niveau de la base (10).

3. Dispositif de nettoyage selon la revendication 2, **caractérisé en ce que** le guidage mécanique comprend au moins un guidage ou logement par au moins une articulation mécanique (24) et/ou au moins un guidage glissant et/ou roulant (27, 29) rotatif et/ou linéaire.

4. Dispositif de nettoyage selon l'une quelconque des revendications précédentes, **caractérisé en ce que** le logement d'objet (19) comprend un dispositif de serrage pour l'au moins un objet (7) et/ou pour une plateforme de construction (14) de l'au moins un objet (7).

5. Dispositif de nettoyage selon l'une quelconque des revendications précédentes, **caractérisé en ce que** l'au moins un degré de liberté comprend un degré de liberté de rotation et/ou un degré de liberté de translation.

6. Dispositif de nettoyage selon l'une quelconque des revendications précédentes, **caractérisé en ce que** le logement d'objet (19) par rapport à la base (10) dans l'au moins un degré de liberté est logé de manière mobile ou guidée de telle manière que le logement d'objet (19) puisse réaliser par rapport à la base (10) un mouvement linéaire et/ou un mouvement de rotation.

7. Dispositif de nettoyage selon l'une quelconque des revendications précédentes, **caractérisé en ce que** la base (10) présente un corps de rotation entraîné en rotation autour d'un premier axe de rotation (12) par un premier entraînement de rotation (13) commandé par la commande électronique.

8. Dispositif de nettoyage selon la revendication 7, **caractérisé en ce que** la commande électronique commande le premier entraînement de rotation (13) de telle manière que la base (10) réalise une première rotation autour du premier axe de rotation (12) dans une première plage d'angle de rotation.

9. Dispositif de nettoyage selon la revendication 7 ou 8, **caractérisé en ce que** l'excitateur d'oscillations (20) est en appui d'une part contre la base (10) et d'autre part contre le logement d'objet (19) de telle manière qu'une seconde rotation du logement d'objet (19) par rapport à la base (10) de préférence autour du premier axe de rotation (12) soit superposée à la première rotation de la base (10).

10. Dispositif de nettoyage selon la revendication 9, **caractérisé en ce que** la seconde rotation constitue une rotation oscillante dans une seconde plage d'angle de rotation.

11. Dispositif de nettoyage selon l'une quelconque des revendications 7 à 10, **caractérisé en ce que** la base (10) est logée de manière entraînable en rotation au niveau d'un bras de pivotement (9) autour du premier axe de rotation (12), dans lequel un second entraînement de rotation est prévu, lequel est commandé par la commande électronique de telle manière que le bras de pivotement (9) soit entraîné en rotation autour d'un second axe de rotation (11).

12. Dispositif de nettoyage selon l'une quelconque des revendications 1 à 6, **caractérisé en ce que** la base comprend au moins un élément statique ou stationnaire du dispositif.

13. Dispositif de nettoyage selon l'une quelconque des revendications précédentes, **caractérisé en ce que** l'excitateur d'oscillations (20) comprend un actionneur linéaire et/ou un entraînement d'excitateur rotatif.

14. Dispositif de nettoyage selon l'une quelconque des revendications précédentes, **caractérisé en ce qu'**une fréquence d'excitateur (fₑ) et/ou une amplitude d'excitateur (Aₑ) pour l'excitateur d'oscillations (20) est prédéfinissable ou paramétrable par la commande électronique, avec laquelle l'excitateur d'oscillations (20) appuyé contre la base (10) excite le logement d'objet (19) pour le faire osciller.

15. Dispositif de nettoyage selon la revendication 13, **caractérisé en ce que** l'excitateur d'oscillations (20) est commandé par la commande électronique de telle manière qu'au cours d'un processus de nettoyage ou au cours d'un cycle de nettoyage, la fréquence d'excitateur (fₑ) et/ou l'amplitude d'excitateur (Aₑ) soit constante.

16. Dispositif de nettoyage selon l'une quelconque des revendications précédentes, **caractérisé en ce qu'**il présente une chambre de nettoyage fermée (14), dans laquelle sont agencés au moins la base (10), le logement d'objet (19) et l'excitateur d'oscillations (20).
